# EUROPEAN PATENT SPECIFICATION

(11) **EP 0 907 876 B1**
(45) Date of publication and mention of the grant of the patent: **10.09.2003**
(21) Application number: 98918028.6
(22) Date of filing: 10.04.1998
(51) Int. Cl.: G01B 13/12, G01B 13/00, G01P 5/12, G01F 1/69, G01F 1/684

(54) **DIFFERENTIAL HOT WIRE AIR GAUGE**
DIFFERENTIAL-HITZEDRAHT-NÄHERUNGSMESSER
MANOMETRE PNEUMATIQUE DIFFERENTIEL A FIL CHAUD

(30) Priority: 25.04.1997 US 845587
(43) Date of publication of application: 14.04.1999
(73) Proprietor: Applied Materials, Inc., Santa Clara, California 95054 (US)
(72) Inventor: THOMAS, Timothy, N., Beaverton, OR 97006 (US); MIRRO, Eugene, Jr., Portland, OR 97223 (US)
(74) Representative: Reinhard - Skuhra - Weise & Partner
(86) International application number: US9806872
(87) International publication number: WO98049523

(56) References cited:
- DE-A- 2 649 040
- DE-A- 3 029 905
- US-A- 4 142 401

## Description

### Field of the Invention

The present invention relates to measurement systems for accurately measuring distances using gas flow sensing such as in focusing of the lens system in photolithography equipment for semiconductor production.

### Description of the Related Art

Accurate measurement of small distances, e.g. 50 µm, between a probe (e.g., a photolithography lens system component) and a nearby surface using gas flow sensing is a known technique. A chamber defined by a probe system and an orifice located in a path between the probe and the target surface is pressurized with gas. A hot-wire anemometer which is a thin resistive wire supported by two support needles is placed in the path of the gas flow. The wire, which is heated by forcing a continuous flow of electric current through it, has a resistance which is directly proportional to its temperature. Variations in the gas flow rate, which is responsive to changes in the distance between the probe and the target surface, control the amount of heat lost by the anemometer to the gas flow which in turn affects the resistance of the anemometer. Measurement of the resistance of the hot-wire is then used to determine its temperature. Variations in the amount of electric current needed to keep the wire's resistance, hence its temperature, constant are used to determine the distance being measured.

U.S. patent No. 5,087,927 to Thomas et al. discloses a gas flow distance measuring device which has an inherently relatively long settling time, resulting from a relatively slow heat transfer between the hot-wire and the needles which support the hot-wire. A step change in the distance under measurement produces a change in the anemometer's temperature due to two separate effects. The first effect is the exchange of energy between the anemometer and the flowing gas, a process which occurs rapidly. The second effect is a relatively gradual transfer of heat between the hot-wire and the needles supporting the hot-wire. This slow energy exchange is caused by the support needles which in conventional gas sensing devices are constructed from low-mass conductive materials resulting in a relatively slow system response time.

The second disadvantage of the above system is that it is subject to acoustic disturbances. Gases reaching the measurement hot-wire and the reference hot-wire do not have identical acoustic pressure. The dissimilarity in the acoustic signature of the gases arriving at the reference system hot-wire and the measurement system hot-wire may result in inaccuracies in the system performance.

The third disadvantage of the above system is that it is susceptible to the noise originating form the gas source which may adversely affect the sensor reading.

DE 2 649 040 discloses a gas flow speed measuring device that uses hot-wire anemometers supported by support members being electrically conductors and having a cross-sectional area greater than the hot-wires.

### Summary

A gas flow sensing system for measuring and controlling the distance between a probe and the target surface includes two hot-wires placed in two separate gas streams with one of the gas streams acting as a reference flow. The differential sensing allowed by use of the reference system filters out changes in the gas properties. Two high-mass needles supporting each one of the hot-wires help reduce the settling time of the hot-wires. A sintered metal diffuser acting as a laminar flow pressure dropping device filters out noise generated by the gas source. The system includes a reference gap as well as a matched configuration in the reference and the measurement system gas flow path to reduce sensitivity to acoustic disturbances.

In accordance with the present invention the gas sensing distance measuring device utilizes hot-wire anemometry which has a short thermal time constant. The gas sensing distance measuring device has a reduced sensitivity to acoustic and fluid dynamic noise sources and has a reduced gas source noise level.

### Brief Description of the Drawings

Fig. 1 illustrates a distance measuring device in accordance with the present invention.
Fig. 2 illustrates a front-view and a side-view of the high-mass hot-wire assembly in accordance with the present invention.

### Detailed Description

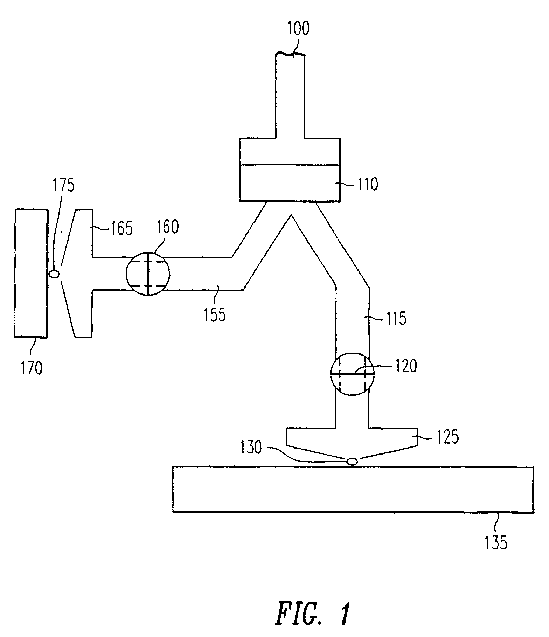

A distance measuring system in accordance with the present invention is illustrated in Fig. 1. The system accurately measures small distances 130 between the probe (e.g., a component of a lens system) 125 and the target surface 135 (e.g., a semiconductor wafer) using gas flow sensing. The system uses two hot-wires, 120 and 160. Hot-wire 120 is placed in the gas flow path of the measurement system in the gaging conduit 115, which is the tubing that provides the passage-way for the gases (e.g., air) in the measurement system. A second hot-wire 160 is placed in the gas flow path of the reference system in the second gaging conduit 155. The reference system has a controlled gas flow rate supplying a fixed gas flow impedance. Changes in the distance 130 between the probe 125 and the target surface 135 force variations in the gas flow rate in gaging conduit 115 which in turn affect the amount of heat lost by the anemometer 120 to the flowing gas stream, thereby affecting the anemometer's electrical resistivity.

The anemometers 120 and 160 include identical thin wires which are heated by a variable flow of electric current through them and whose resistances are proportional to their temperatures. Changes in the temperature, pressure or composition of the gas affect both the reference gas stream 155 and the measurement gas stream 115 equally, producing identical changes in anemometers 120 and 160 which are monitored simultaneously by a differential amplifier (not shown) and the output signal of which thereby only responds to differences in the gas flow. The differential amplifier output signal (voltage) is used to measure and control via a conventional feedback system (not shown) the distance 130 between the probe 125 and the target surface 135.

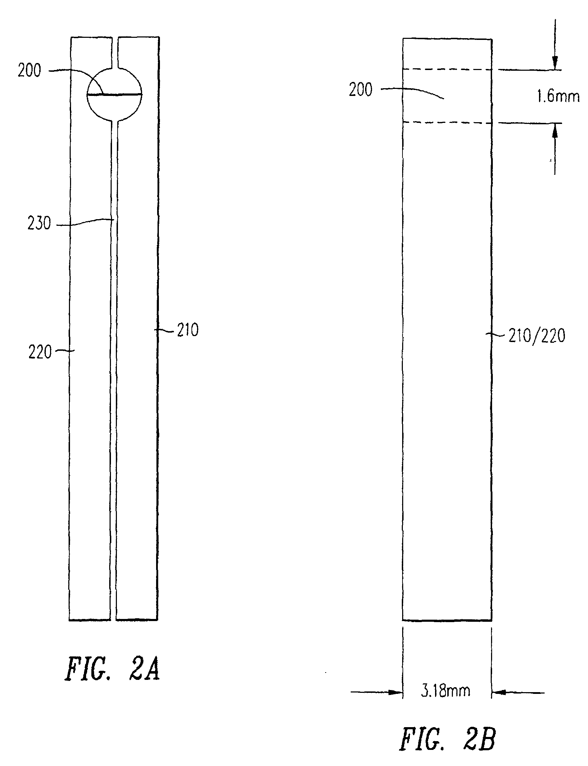

One embodiment of the present invention uses for each hot-wire anemometer, 120, 160, a hot-wire 200, that is supported by two separate high-mass needles, 210, 220, as illustrated in Fig. 2A in a front view and Fig. 2B in a side view. By increasing the mass of the support needles over those of the prior art, e.g. Wilson (U.S. patent No. 4,142,401) and Thomas et. al (U.S. patent no. 5,087,927), the hot-wire 200 behaves as though it is coupled to a constant temperature surface, providing a reduced settling time for the hot-wire 200. The support needles 210, 220 are constructed from high mass high thermal conductivity materials such as copper or silver to aid in the rapid exchange of energy between the hot-wire 200 and the support needles 210, 220 which occurs whenever the gas flow rate changes. The rate of this energy transfer directly affects the response time of the hot-wire 200. The high thermal conductivity as well as the high mass of the support needles 210, 220 aid in reducing the response time of the hot-wire. As Fig. 2 illustrates, the two support needles 210, 220 are entirely separated from each other by an insulating material 230, with the hot-wire 200 providing the only path for the flow of electric current between the two support needles 210, 220.

In one embodiment of the present invention the hot-wire 200 is a platinum plated tungsten wire with a diameter of .004 millimeter, a length of 1.5 millimeters and is soldered to the needles 210,220 with 80% In, 15% Pb and 5% Ag solder. The support needles are constructed from fine silver, 99.99 purity or better, type 12000. The support needles are 3.5 centimeters in length and are notched to allow for the insertion of the hot-wire. The solder should not extend outside the notch so as not to impede the flow of air in the area where the hot-wire is placed. DP-190 epoxy is used as insulation 230 between the two support needles. The sintered metal diffuser is a stainless steel filter manufactured by Capstan Permaflow, grade FCR2030, with a particle removal size of 2-5 microns and a maximum pore size of 10-13 microns. Conventional gas sensing measurement systems exhibit thermal time constants ranging from half a second to a full second. Using the support needles 210, 220 in accordance with the present invention, thermal time constants in the range of 50 msec to 60 msec are achieved.

In one embodiment of the system, referring to Fig. 1, gas ( e.g. air) arrives at the gas inlet 100 with a pressure of 4 PSI, and passes through a sintered metal diffuser 110 which supplies a near ambient pressure gas to the reference and the measurement gaging conduits 155 and 115. Gas source pressure dropping devices, such as small orifices, are generally "noisy" and thereby supply a turbulent gas flow. The sintered metal diffuser 110 acts as a laminar flow pressure dropping device, eliminating noise due to turbulence which may adversely affect sensor performance.

One embodiment includes a reference gap 175 that closely matches the measurement gap 130 by placing a reference surface 170 at a distance from the reference probe 165 that is about the same as the distance being measured. Reference system 155 has a gas flow path configuration that matches that of the measurement system 115 to help achieve matched fluid impedance and inductance between the two gas streams. The matched configuration minimizes the sensitivity to acoustic disturbances by allowing the acoustic pressure waves to reach the reference hot-wire and the measurement hot-wire at the same time with the same amplitude. The elimination of differences due to acoustic disturbances produces an acoustic signature that is identical in both the measurement stream and the reference stream, thereby minimizing the sensitivity to acoustic noise sources.

This disclosure is illustrative and not limiting; further modifications will be apparent to one skilled in the art and are intended to fall within the scope of the appended claims.

## Claims

1. A distance measuring system comprising a measurement gaging conduit (115) having an inlet and an outlet and having a hot-wire anemometer (120; 200, 210, 220, 230) disposed therein; wherein said hot-wire anemometer (120; 200, 210, 220, 230) comprises a first support member (210) being connected to a first end of a hot-wire (200) and a second support member (220) being connected to a second end of said hot-wire (200), **characterised in that** each said support member consists of a highly thermally conductive material and each having a substantially greater cross-sectional area and mass than said hot-wire (200), wherein said first support member (210) and said second support member (220) are separated from one another by an intervening insulating material (230); the measuring system further comprising a reference gaging conduit (155) having an inlet and an outlet and in which a second hot-wire anemometer (160; 200, 210, 220, 230) is disposed; wherein said hot-wire anemometer (160; 200, 210, 220, 230) comprises a first support member (210) being connected to a first end of a second hot-wire (200) and a second support member (220) being connected to a second end of said second hot-wire (200), each said support member (210, 220) consisting of a highly thermally conductive material and each having a substantially greater cross-sectional area and mass than said second hot-wire (200); wherein said first support member (210) and said second support member (220) are separated from one another by an intervening insulating material (230), said measurement gaging conduit (115) and said reference gaging conduit (155) have similar gas flow paths and wherein a reference surface (170) is disposed at the outlet of the reference system at a distance from a reference probe (165) that is in the range of the distance being measured between the target surface (135) and the measuring probe (125).

2. A distance measuring system according to claim 1 further comprising a pressure dropping device (110) to supply a laminar gas flow and disposed at the inlet (100) of the measurement and the reference gaging conduits (115, 155).

3. A distance measuring system according to claim 2, wherein said pressure dropping device (110) comprises a sintered metal diffuser.

## Patentansprüche

1. Abstandsmesssystem, welches ein Maßlehrrohr (115) mit einem Einlass und Auslass und mit einem darin angeordneten Hitzedrahtanemometer (120; 200, 210, 220, 230) umfasst; wobei das Hitzedrahtanemometer (120; 200, 210, 220, 230) ein erstes Stützelement (210), welches an einem ersten Ende eines Hitzedrahtes (200) angeschlossen ist, und ein zweites Stützelement (220) umfasst, welches an einem zweiten Ende des Hitzedrahtes (200) angeschlossen ist, **dadurch gekennzeichnet, dass** jedes Stützelement aus einem gut wärmeleitenden Material besteht und jedes eine wesentlich höhere Querschnittsfläche und Masse als der Hitzedraht (200) aufweist, wobei das erste Stützelement (210) und das zweite Stützelement (220) voneinander durch ein dazwischen liegendes Isoliermaterial (230) getrennt sind; wobei das Messsystem weiter ein Prüflehrrohr (155) mit einem Einlass und Auslass umfasst, und in welchem ein zweites Hitzedrahtanemometer (160; 200, 210, 220, 230) angeordnet ist; wobei das Hitzedrahtanemometer (160; 200, 210, 220, 230) ein erstes an einem ersten Ende eines zweiten Hitzedrahtes (200) angeschlossenes Stützelement (210) und ein zweites an einem zweiten Ende des zweiten Hitzedrahtes (200) angeschlossenes Stützelement (220) umfasst, wobei jedes Stützelement (210, 220) aus einem gut wärmeleitenden Material besteht und jedes eine wesentlich größere Querschnittsfläche und Masse als der zweite Hitzedraht (200) aufweist; wobei das erste Stützelement (210) und das zweite Stützelement (220) voneinander durch ein dazwischen liegendes Isoliermaterial (230) getrennt sind, wobei das Maßlehrrohr (115) und das Prüflehrrohr (155) ähnliche Gasdurchflusswege aufweisen und wobei eine Bezugsfläche (170) am Auslass des Bezugssystems in einem Abstand von einem Bezugsfühler (165), d.h. im Bereich des gemessenen Abstandes zwischen der Zielfläche (135) und dem Messfühler (125) angeordnet ist.

2. Abstandsmesssystem nach Anspruch 1, welches weiter eine Druckabfalleinrichtung (110) umfasst, um einen laminaren Gasfluss zuzuführen, welche am Einlass (100) der Maß- und Prüflehrrohre (115, 155) angeordnet ist.

3. Abstandsmesssystem nach Anspruch 2, wobei die Druckabfalleinrichtung (110) einen Sintermetalldiffusor umfasst.

## Revendications

1. Dispositif de mesure de la distance comprenant une conduite de calibrage de mesure (115) ayant une entrée et une sortie et ayant un anémomètre à fil chaud (120 ; 200, 210, 220, 230) disposés à l'intérieur de celle-ci ; dans lequel ledit anémomètre à fil chaud (120 ; 200, 210, 220, 230) comprend un premier élément de support (210) raccordé à une première extrémité d'un fil chaud (200) et un second élément de support (220) raccordé à une seconde extrémité dudit fil chaud (200), **caractérisé en ce que** chacun desdits éléments de support est composé d'un matériau hautement conducteur thermiquement et chacun ayant une zone transversale et une masse sensiblement supérieures audit fil chaud (200), dans lequel ledit premier élément de support (210) et ledit second élément de support (220) sont séparés l'un de l'autre par un matériau isolant interposé (230) ; le système de mesure comprenant en outre une conduite de calibrage de référence (155) ayant une entrée et une sortie et dans laquelle un second anémomètre à fil chaud (160 ; 200, 210, 220, 230) est disposé ; dans lequel ledit anémomètre à fil chaud (160 ; 200, 210, 220, 230) comprend un premier élément de support (210) raccordé à une première extrémité d'un second fil chaud (200) et un second élément de support (220) raccordé à une seconde extrémité dudit second fil chaud (200), chacun desdits éléments de support (210, 220) étant constitué d'un matériau hautement conducteur thermiquement et chacun ayant une zone transversale et une masse sensiblement supérieures audit second fil chaud (200) ; dans lequel ledit premier élément de support (210) et ledit second élément de support (220) sont séparés l'un de l'autre par un matériau isolant interposé (230), ladite conduite de calibrage de mesure (115) et ladite conduite de calibrage de référence (155) présentant des chemins d'écoulement de gaz similaires et dans lesquelles une surface de référence (170) est disposée au niveau de la sortie du système de référence à une certaine distance d'une sonde de référence (165) qui se trouve dans la plage de distance mesurée entre la surface cible (135) et la sonde de mesure (125).

2. Système de mesure de la distance selon la revendication 1 comprenant en outre un dispositif de chute de pression (110) pour fournir un écoulement de gaz laminaire et disposé à l'entrée (100) des conduites de calibrage de mesure et de référence (115, 155).

3. Système de mesure de la distance selon la revendication 2, dans lequel ledit dispositif de chute de pression (110) comprend un diffuseur métallique fritté.
